# EUROPÄISCHE PATENTSCHRIFT

(11) **EP 3 434 087 B1**
(45) Veröffentlichungstag und Bekanntmachung des Hinweises auf die Patenterteilung: **15.02.2023**
(21) Anmeldenummer: 18401061.9
(22) Anmeldetag: 16.07.2018
(51) Int. Cl.: A01B 63/111, A01B 79/00

(54) **VERFAHREN ZUM UNTERSTÜTZEN EINES MASCHINENBEDIENERS BEIM EINSTELLEN EINER LANDWIRTSCHAFTLICHEN BODENBEARBEITUNGSMASCHINE**
METHOD FOR SUPPORTING A MACHINE OPERATOR WHEN ADJUSTING AN AGRICULTURAL SOIL WORKING MACHINE
PROCÉDÉ D'AIDE À UN OPÉRATEUR DE MACHINE LORS DU RÉGLAGE D'UNE MACHINE DE TRAITEMENT DU SOL AGRICOLE

(30) Priorität: 24.07.2017 DE 102017116593
(43) Veröffentlichungstag der Anmeldung: 30.01.2019
(73) Patentinhaber: Amazonen-Werke H. Dreyer SE & Co. KG, 49205 Hasbergen (DE)
(72) Erfinder: Rehnen, Pascal, 49328 Melle (DE)

(56) Entgegenhaltungen:
- EP-A1- 1 300 061
- EP-A2- 0 838 139
- EP-A2- 2 708 103

## Beschreibung

Die Erfindung betrifft ein Verfahren zum Unterstützen eines Maschinenbedieners beim Einstellen einer landwirtschaftlichen Bodenbearbeitungsmaschine nach dem Oberbegriff des Patentanspruchs 1 und eine landwirtschaftliche Bodenbearbeitungsmaschine nach dem Oberbegriff des Patentanspruchs 8.

Bei der Bearbeitung von landwirtschaftlich genutzten Böden kommt dem Einstellen der verwendeten landwirtschaftlichen Bodenbearbeitungsmaschine eine besondere Bedeutung zu, da das Bearbeitungsergebnis, der Kraftstoffverbrauch des die landwirtschaftliche Bodenbearbeitungsmaschine ziehenden oder tragenden Fahrzeugs und die Abnutzung der landwirtschaftlichen Bodenbearbeitungsmaschine wesentlich von den eingestellten Maschinenparametern der landwirtschaftlichen Bodenbearbeitungsmaschine abhängen.

Damit die Bearbeitung des landwirtschaftlichen Bodens zu zufriedenstellenden Ergebnissen führt, ist es bekannt, vor dem Bodenbearbeitungsvorgang einen oder mehrere geeignete Einstellparameter für die landwirtschaftliche Bodenbearbeitungsmaschine zu ermitteln, sodass der eine oder die mehreren ermittelten Einstellparameter selbsttätig durch die landwirtschaftliche Bodenbearbeitungsmaschine eingestellt werden können.

Beispielsweise ist aus der Druckschrift EP 1 252 806 A2 eine landwirtschaftliche Bodenbearbeitungsmaschine bekannt, bei welcher die Lage des landwirtschaftlichen Bodenbearbeitungsgeräts relativ zu einem Zugfahrzeug ermittelt wird, sodass ein geeigneter Zugpunkt automatisch eingestellt werden kann. Eine weitere automatische Zugpunktanpassung ist beispielsweise aus der Druckschrift DE 35 23 748 A1 bekannt. Die EP 2 708 103 A2 offenbart eine Kombination aus einem Zugfahrzeug und einer Bodenbearbeitungsmaschine, wobei die Einstellparameter des Zugfahrzeugs eingestellt werden.

Es hat sich jedoch gezeigt, dass die automatische bzw. selbsttätige Einstellung geeigneter Einstellparameter in bestimmten Betriebssituationen nicht vorteilhaft oder von dem jeweiligen Maschinenbediener nicht gewünscht ist. Beispielsweise sind bei der Einstellung einer landwirtschaftlichen Bodenbearbeitungsmaschine regelmäßig Faktoren zu berücksichtigen, welche von der Sensorik der landwirtschaftlichen Bodenbearbeitungsmaschine nicht oder nicht mit einer ausreichenden Präzision erfasst werden können. Eine selbsttätige Einstellung von Einstellparametern verbietet die Einflussnahme des Maschinenbedieners, sodass wichtige Einflussfaktoren bei der Einstellung der Einstellparameter möglicherweise unberücksichtigt bleiben.

Die der Erfindung zugrunde liegende Aufgabe besteht somit darin, einen Maschinenbediener beim Einstellen einer landwirtschaftlichen Bodenbearbeitungsmaschine zu unterstützen, ohne dabei die Zuständigkeit für die Einstellung eines oder mehrerer geeigneter Einstellparameter an die landwirtschaftliche Bodenbearbeitungsmaschine abzugeben.

Die Aufgabe wird gelöst durch ein Verfahren der eingangs genannten Art, wobei ein Einstellvorschlag für die landwirtschaftliche Bodenbearbeitungsmaschine, welcher bei Befolgung zur Einstellung des einen oder der mehreren geeigneten Einstellparameter an der landwirtschaftlichen Bodenbearbeitungsmaschine führt, ausgegeben wird.

Die Erfindung macht sich die Erkenntnis zunutze, dass durch die Ausgabe eines Einstellvorschlags die Zuständigkeit für die Einstellung geeigneter Einstellparameter weiterhin bei dem Maschinenbediener verbleibt, dessen Entscheidungsprozess für die Wahl eines oder mehrerer Einstellparameter durch den Einstellvorschlag erheblich erleichtert wird. Es liegt somit weiterhin im Ermessen des Maschinenbedieners, ob der Einstellvorschlag vollständig oder nur teilweise befolgt wird. Dabei kann der Maschinenbediener bei der Einstellung des einen oder der mehreren Einstellparameter von dem ausgegebenen Einstellvorschlag abweichen, um Einflussfaktoren zu berücksichtigen, welche von der Sensorik der landwirtschaftlichen Bodenbearbeitungsmaschine nicht oder mit einer nicht ausreichenden Präzision erfasst werden. Ferner kann der Maschinenbediener den ausgegebenen Einstellvorschlag in Gänze befolgen, wenn der Maschinenbediener der Auffassung ist, dass bei der Erzeugung des Einstellvorschlags sämtliche relevante Einflussfaktoren berücksichtigt worden sind. Letztendlich wird dem Maschinenbediener ein Einstellvorschlag zur Verfügung gestellt, von dem der Maschinenbediener, beispielsweise aufgrund seiner langjährigen Erfahrung im Bereich der landwirtschaftlichen Bodenbearbeitung, in eigenem Ermessen abweichen kann.

Vorzugsweise erfolgt das Ermitteln des einen oder der mehreren geeigneten Einstellparameter für die landwirtschaftliche Bodenbearbeitungsmaschine selbsttätig durch die landwirtschaftliche Bodenbearbeitungsmaschine. Alternativ oder zusätzlich kann der eine oder können die mehreren geeigneten Einstellparameter auch von einem die landwirtschaftliche Bodenbearbeitungsmaschine tragenden oder ziehenden Fahrzeug oder einer externen Einrichtung erzeugt werden. Bei der Ermittlung des einen oder der mehreren für den momentanen oder geplanten Bodenbearbeitungsvorgang geeigneten Einstellparameter für die landwirtschaftliche Bodenbearbeitungsmaschine können beispielsweise Daten berücksichtigt werden, welche von einem oder mehreren Sensoren der landwirtschaftlichen Bodenbearbeitungsmaschine zur Verfügung gestellt werden. Ferner können Daten berücksichtigt werden, welche von externen Messeinrichtungen und/oder Sensoren des die landwirtschaftliche Bodenbearbeitungsmaschine ziehenden oder tragenden Fahrzeugs zur Verfügung gestellt werden. Darüber hinaus können auch Daten berücksichtigt werden, welche der Maschinenbediener, insbesondere durch manuelle Eingabe, zur Verfügung gestellt hat. Außerdem können zum Ermitteln des einen oder der mehreren geeigneten Einstellparameter für die landwirtschaftliche Bodenbearbeitungsmaschine eine oder mehrere Kameras zum Einsatz kommen, wobei die eine oder die mehreren Kameras Bestandteile der landwirtschaftlichen Bodenbearbeitungsmaschine, des die landwirtschaftliche Bodenbearbeitungsmaschine ziehenden oder tragenden Fahrzeugs und/oder einer externen Einrichtung sein können. Unter einem geeigneten Einstellparameter ist ein Einstellparameter zu verstehen, welcher zu einem möglichst optimalen und für den Maschinenbediener zufriedenstellenden Bodenbearbeitungsergebnis führt.

In einer bevorzugten Ausführungsform des erfindungsgemäßen Verfahrens umfasst der eine oder umfassen die mehreren geeigneten Einstellparameter für die landwirtschaftliche Bodenbearbeitungsmaschine den Zugpunkt, die Vorderfurchenbreite, die Arbeitsbreite und/oder die Arbeitstiefe der landwirtschaftlichen Bodenbearbeitungsmaschine. Dabei kann der Einstellvorschlag einen, mehrere oder sämtliche der genannten Einstellparameter betreffen. Ferner kann der Einstellvorschlag auch Parameter des die landwirtschaftliche Bodenbearbeitungsmaschine ziehenden oder tragenden Fahrzeugs betreffen, beispielsweise den Zustand einer Kupplungseinrichtung, insbesondere eines DreipunktKrafthebers, die Fahrgeschwindigkeit und/oder den Lenkwinkel des die landwirtschaftliche Bodenbearbeitungsmaschine ziehenden oder tragenden Fahrzeugs.

In einer vorteilhaften Weiterbildung des erfindungsgemäßen Verfahrens erfolgt das Ausgeben des Einstellvorschlags für die landwirtschaftliche Bodenbearbeitungsmaschine mittels einer Anzeigeeinrichtung, insbesondere mittels eines Displays. Das Display kann auch als Touchscreen ausgebildet sein, sodass die Annahme oder eine Modifikation des ausgegebenen Einstellvorschlags unmittelbar am Touchscreen erfolgen kann. Alternativ oder zusätzlich kann das Ausgeben des Einstellvorschlags und/oder eines Hinweises auf einen Einstellvorschalg für die landwirtschaftliche Bodenbearbeitungsmaschine auch akustisch erfolgen. Dies kann insbesondere dann vorteilhaft sein, wenn der Einstellvorschlag während eines Bodenbearbeitungsvorgangs ausgegeben wird, da der Maschinenbediener während des Bodenbearbeitungsvorgangs üblicherweise nicht ununterbrochen die auf einem Display angezeigten Informationen wahrnimmt. Durch eine akustische Ausgabe des Einstellvorschlags und/oder des Hinweises auf den Einstellvorschlag kann der Maschinenbediener während des Bodenbearbeitungsvorgangs auf die Notwendigkeit einer Anpassung eines oder mehrerer Einstellparameter aufmerksam gemacht werden. Die akustische Ausgabe des Einstellvorschlags und/oder des Hinweises auf den Einstellvorschlag erfolgt vorzugsweise über einen oder mehrere Lautsprecher.

In einer anderen Ausführungsform des erfindungsgemäßen Verfahrens ist die Anzeigeeinrichtung ein Bestandteil der landwirtschaftlichen Bodenbearbeitungsmaschine, eines die landwirtschaftliche Bodenbearbeitungsmaschine tragenden oder ziehenden Fahrzeugs oder eines mobilen Endgeräts. Insbesondere, wenn die Einstellparameter manuell durch den Maschinenbediener unmittelbar an der landwirtschaftlichen Bodenbearbeitungsmaschine einzustellen sind, ist es vorteilhaft, wenn die Anzeigeeinrichtung ein Bestandteil der landwirtschaftlichen Bodenbearbeitungsmaschine ist. Während des Bodenbearbeitungsvorgangs befindet sich der Maschinenbediener üblicherweise im Führerhaus des die landwirtschaftliche Bodenbearbeitungsmaschine ziehenden oder tragenden Fahrzeugs. Aus diesem Grund ist es vorteilhaft, dass die Anzeigeeinrichtung im Führerhaus des die landwirtschaftliche Maschine ziehenden oder tragenden Fahrzeugs angeordnet ist, wenn der Maschinenbediener Einstellvorschläge während des Bodenbearbeitungsvorgangs wahrnehmen soll. In diesem Fall kann die Anzeigeeinrichtung Bestandteil eines in der Landwirtschaft gebräuchlichen Terminals sein. Ferner kann der Einstellvorschlag auch mittels eines mobilen Endgeräts, wie beispielsweise eines Tablets oder eines Smartphones, ausgegeben werden. Ein mobiles Endgerät kann vom Maschinenbediener sowohl im Führerhaus des die landwirtschaftliche Bodenbearbeitungsmaschine ziehenden oder tragenden Fahrzeugs als auch außerhalb des Führerhauses, beispielsweise im Bereich der landwirtschaftlichen Bodenbearbeitungsmaschine verwendet werden. In analoger Weise kann der eine oder können die mehreren Lautsprecher, welche zur akustischen Ausgabe des Einstellvorschlags Verwendung finden können, Bestandteil der landwirtschaftlichen Bodenbearbeitungsmaschine, eines die landwirtschaftliche Bodenbearbeitungsmaschine tragenden oder ziehenden Fahrzeugs, eines Terminals oder eines mobilen Endgeräts sein.

In einer weiteren Ausführungsform des erfindungsgemäßen Verfahrens umfasst das Ausgeben des Einstellvorschlags für die landwirtschaftliche Bodenbearbeitungsmaschine das Anzeigen eines herbeizuführenden Zustands einer oder mehrerer Einstelleinrichtungen der landwirtschaftlichen Bodenbearbeitungsmaschine. Der herbeizuführende Zustand kann beispielsweise eine einzustellende Stufe einer mehrstufig einstellbaren Einstelleinrichtung der landwirtschaftlichen Bodenbearbeitungsmaschine sein. Alternativ oder zusätzlich kann der herbeizuführende Zustand auch eine einzustellende Länge eines längenveränderlichen Einstellglieds, wie etwa einer einstellbaren Einstell-Spindel der landwirtschaftlichen Bodenbearbeitungsmaschine sein.

Das erfindungsgemäße Verfahren wird ferner dadurch vorteilhaft weitergebildet, dass das Anzeigen des herbeizuführenden Zustands der einen oder der mehreren Einstelleinrichtungen der landwirtschaftlichen Bodenbearbeitungsmaschine das Anzeigen eines oder mehrerer Zielwerte, welche jeweils an einer Einstellskala einer Einstelleinrichtung der landwirtschaftlichen Bodenbearbeitungsmaschine einzustellen sind, umfasst. Die Einstellskala kann beispielsweise einen Zahlen-oder Buchstabenbereich aufweisen, wobei der Einstellvorschlag die Angabe einer Zahl aus dem Zahlenbereich oder eines Buchstabens aus dem Buchstabenbereich umfasst. Die Einstellskala kann auch Zahlenwerte aufweisen, welche physikalischen Einstellgrößen zugeordnet sind. Somit kann die Einstellskala Werte aufweisen, aus welchen sich beispielsweise die tatsächlich einstellbare und eingestellte Vorderfurchenbreite oder die tatsächlich einstellbare oder eingestellte Arbeitsbreite der landwirtschaftlichen Bodenbearbeitungsmaschine ergibt. Alternativ oder zusätzlich kann das Anzeigen des herbeizuführenden Zustands der einen oder der mehreren Einstelleinrichtungen der landwirtschaftlichen Bodenbearbeitungsmaschine das Anzeigen eines Abbilds der einzustellenden Einstelleinrichtung der landwirtschaftlichen Bodenbearbeitungsmaschine umfassen. Durch das Anzeigen eines Abbilds der einzustellenden Einstelleinrichtung der landwirtschaftlichen Bodenbearbeitungsmaschine können die Einstellungen auch von einem Maschinenbediener vorgenommen werden, welcher mit der landwirtschaftlichen Bodenbearbeitungsmaschine nicht vertraut ist. Eine zeit- und somit kostenaufwändige Einweisung eines Maschinenbedieners in die verschiedenen Einstellmöglichkeiten der landwirtschaftlichen Bodenbearbeitungsmaschine kann somit entfallen oder erheblich verkürzt werden. Das Abbild der einzustellenden Einstelleinrichtung kann beispielsweise eine schematische Darstellung der einzustellenden Einstelleinrichtung, ein digitales Modell der einzustellenden Einstelleinrichtung oder ein Foto der einzustellenden Einstelleinrichtung umfassen. Ferner kann das Anzeigen des herbeizuführenden Zustands der einen oder der mehreren Einstelleinrichtungen der landwirtschaftlichen Bodenbearbeitungsmaschine das Abspielen einer Animation umfassen, welche die vorzunehmende Einstellung an der Einstelleinrichtung der landwirtschaftlichen Bodenbearbeitungsmaschine zeigt. Auf diese Weise wird der Maschinenbediener nicht nur auf die Optik der einzustellenden Einstelleinrichtung hingewiesen, sondern ihm werden darüber hinaus auch Informationen bereitgestellt, wie der Einstellvorgang auszuführen ist. Insbesondere, wenn zur Einstellung der Einstelleinrichtung Werkzeug benötigt wird, kann das Abspielen einer entsprechenden Einstellanimation den Einstellvorgang erheblich beschleunigen und das Risiko einer Fehleinstellung beträchtlich verringern.

Außerdem ist ein erfindungsgemäßes Verfahren bevorzugt, bei welchem der eine oder die mehreren momentan eingestellten Einstellparameter der landwirtschaftlichen Bodenbearbeitungsmaschine ermittelt werden und/oder der eine oder die mehreren momentan eingestellten Einstellparameter der landwirtschaftlichen Bodenbearbeitungsmaschine mit dem einen oder den mehreren für den momentanen oder geplanten Bodenbearbeitungsvorgang geeigneten Einstellparametern für die landwirtschaftliche Bodenbearbeitungsmaschine verglichen werden. Das Ermitteln des einen oder der mehreren momentan eingestellten Einstellparameter der landwirtschaftlichen Bodenbearbeitungsmaschine kann das Ermitteln unterschiedlicher Ist-Werte umfassen. Dazu können beispielsweise Sensoren, insbesondere Sensoren der landwirtschaftlichen Bodenbearbeitungsmaschine eingesetzt werden. Ferner ist es möglich, einen oder mehrere momentan eingestellte Einstellparameter der landwirtschaftlichen Bodenbearbeitungsmaschine über eine Einstellhistorie des einen oder der mehreren Einstellparameter zu ermitteln.

Ferner ist ein erfindungsgemäßes Verfahren vorteilhaft, bei welchem der Effekt, welcher sich durch die Einstellung des einen oder der mehreren geeigneten Einstellparameter an der landwirtschaftlichen Bodenbearbeitungsmaschine ergibt, ermittelt wird und/oder der ermittelte Effekt ausgegeben, insbesondere angezeigt wird. Der Effekt, welcher sich durch die Einstellung des einen oder der mehreren geeigneten Einstellparameter an der landwirtschaftlichen Bodenbearbeitungsmaschine ergibt, kann beispielsweise die Kraftstoffeinsparung sein, welche sich durch die Einstellung eines geeigneten Zugpunkts und/oder einer geeigneten Arbeitstiefe ergibt. Der Effekt, welcher sich durch die Einstellung des einen oder der mehreren geeigneten Einstellparameter an der landwirtschaftlichen Bodenbearbeitungsmaschine ergibt, kann auch die sich ergebende Bearbeitungszeit oder die durch die Einstellung eingesparte Bearbeitungszeit betreffen.

Außerdem ist ein erfindungsgemäßes Verfahren bevorzugt, bei welchem der eine oder die mehreren Einstellparameter durch die landwirtschaftliche Bodenbearbeitungsmaschine selbsttätig eingestellt werden, wobei das selbsttätige Einstellen des einen oder der mehreren Einstellparameter durch die landwirtschaftliche Bodenbearbeitungsmaschine vorzugsweise von einer Freigabe des Maschinenbedieners abhängig ist. Dadurch, dass das selbsttätige Einstellen des einen oder der mehreren Einstellparameter durch die landwirtschaftliche Bodenbearbeitungsmaschine von einer Freigabe des Maschinenbedieners abhängig ist, liegt die Zuständigkeit für das Einstellen des einen oder der mehreren geeigneten Einstellparameter weiterhin beim Maschinenbediener.

Die der Erfindung zugrunde liegende Aufgabe wird ferner durch eine landwirtschaftliche Bodenbearbeitungsmaschine gelöst, wobei die landwirtschaftliche Bodenbearbeitungsmaschine dazu eingerichtet ist, das Verfahren zum Unterstützen eines Maschinenbedieners beim Einstellen der landwirtschaftlichen Bodenbearbeitungsmaschine nach einer der vorstehend beschriebenen Ausführungsformen auszuführen. Hinsichtlich der Vorteile und Modifikationen der erfindungsgemäßen landwirtschaftlichen Bodenbearbeitungsmaschine wird auf die Vorteile und Modifikationen des erfindungsgemäßen Verfahrens verwiesen.

Die Erfindung bezieht sich in analoger Weise auf beliebige Bodenbearbeitungsmaschinen. Eine analoge Umsetzung ist zudem auch bei anderen landwirtsdchaftlichen Arbeitsgeräten, beispielsweise Sämaschinen, Fledspritzen oder Düngerstreuern möglich.

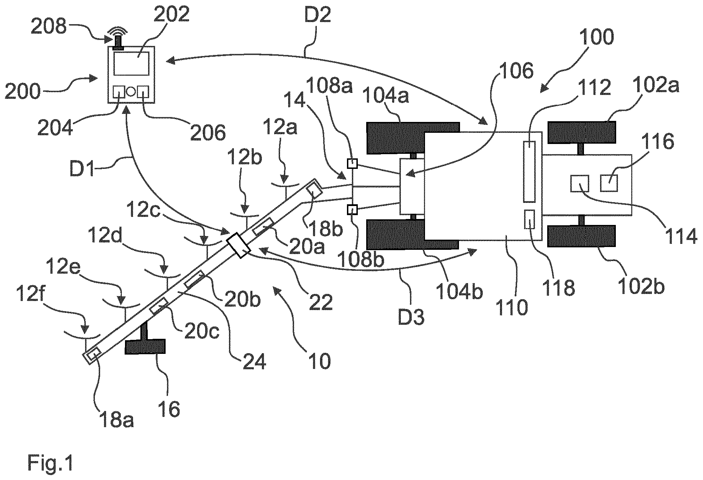

Weitere Einzelheiten der Erfindung sind der Figurenbeschreibung und der Zeichnung zu entnehmen. Die Figur zeigt ein Ausführungsbeispiel der erfindungsgemäßen landwirtschaftlichen Bodenbearbeitungsmaschine beim Ausführen des erfindungsgemäßen Verfahrens.

Die Figur zeigt eine als Pflug ausgebildete landwirtschaftliche Bodenbearbeitungsmaschine 10, ein die landwirtschaftliche Bodenbearbeitungsmaschine 10 ziehendes und als Traktor ausgebildetes Fahrzeug 100 und ein als Tablet ausgebildetes mobiles Endgerät 200.

Die landwirtschaftliche Bodenbearbeitungsmaschine 10 weist mehrere Bodenbearbeitungswerkzeuge 12a-12f auf. Die Bodenbearbeitungswerkzeuge 12a-12f umfassen jeweils einen Pflugkörper, welcher während der Bodenbearbeitung durch das Erdreich bewegt wird.

Die landwirtschaftliche Bodenbearbeitungsmaschine 10 weist eine Kupplungseinrichtung 14 auf, über welche die landwirtschaftliche Bodenbearbeitungsmaschine 10 mit einer Kupplungseinheit 106 des Fahrzeugs 100 verbunden ist. Die Kupplungseinheit 106 des Fahrzeugs 100 ist als Dreipunkt-Kraftheber ausgebildet. Außerdem weist die landwirtschaftliche Bodenbearbeitungsmaschine 10 ein Stützrad 16 auf, mittels welchem der Rahmen 24 der landwirtschaftlichen Bodenbearbeitungsmaschine 10 gegenüber dem Boden abgestützt wird.

Außerdem weist die landwirtschaftliche Bodenbearbeitungsmaschine 10 mehrere Sensoren 18a, 18b auf. Der Sensor 18a ist in dem hinteren Bereich der landwirtschaftlichen Bodenbearbeitungsmaschine 10 angeordnet, wobei der Sensor 18b in dem vorderen Bereich der landwirtschaftlichen Bodenbearbeitungsmaschine 10 angeordnet ist. Die Sensoren 18a, 18b ermitteln den Abstand des vorderen und des hinteren Bereichs der landwirtschaftlichen Bodenbearbeitungsmaschine 10 zum Boden, sodass aus den Sensordaten auch die Ausrichtung der landwirtschaftliche Bodenbearbeitungsmaschine 10 zu dem Boden abgeleiteten werden kann.

Ferner umfasst die landwirtschaftliche Bodenbearbeitungsmaschine 10 drei Einstelleinrichtungen 20a-20c. Die Einstelleinrichtung 20a ist dazu eingerichtet, den Zugpunkt der landwirtschaftlichen Bodenbearbeitungsmaschine 10 einzustellen. Die Einstelleinrichtung 20b ist dazu eingerichtet, die Vorderfurchenbreite der landwirtschaftlichen Bodenbearbeitungsmaschine 10 einzustellen. Die Einstelleinrichtung 20c ist dazu eingerichtet, die Arbeitsbreite der landwirtschaftlichen Bodenbearbeitungsmaschine 10 einzustellen. Mithin sind der Zugpunkt, die Vorderfurchenbreite und die Arbeitsbreite einstellbare Einstellparameter der landwirtschaftlichen Bodenbearbeitungsmaschine 10.

Zusätzlich weist die landwirtschaftliche Bodenbearbeitungsmaschine 10 eine Steuerungseinrichtung 22 auf, welche mit den Sensoren 18a, 18b, den Einstelleinrichtungen 20a-20c und dem Fahrzeug 100 signalübertagend verbunden ist.

Das Fahrzeug 100 weist zwei Vorderräder 102a, 102b und zwei Hinterräder 104a, 104b auf. Zwischen den Vorderrädern 102a, 102b und den Hinterrädern 104a, 104b ist ein Führerhaus 110 angeordnet.

Die Kupplungseinheit 106 weist zwei als Kraftaufnehmer ausgebildete Sensoren 108a, 108b auf. Die Sensoren 108a, 108b erfassen die an den Unterlenkern der Kupplungseinheit 106 wirkenden Kräfte, woraus ein Steuergerät 114 den Zugpunkt der landwirtschaftlichen Bodenbearbeitungsmaschine 10 ermitteln kann. Außerdem umfasst das Fahrzeug 100 einen Sensor 116, welcher dazu eingerichtet ist, die Geschwindigkeit und Beschleunigung des Fahrzeugs 100 zu ermitteln. Das Steuergerät 114 ist mit sämtlichen Sensoren 108a, 108b, 116 und der landwirtschaftlichen Bodenbearbeitungsmaschine 10 signalübertragend verbunden.

Außerdem weist das Fahrzeug 100 innerhalb des Führerhauses 110 einen als Touchscreen ausgebildeten Display 112 und einen Lautsprecher 118 auf. Das Display 112 ist dazu eingerichtet, dem Maschinenbediener visuell Informationen zur Verfügung zu stellen. Der Lautsprecher 118 ist dazu eingerichtet, dem Maschinenbediener akustisch Informationen zur Verfügung zu stellen.

Das mobile Endgerät 200 umfasst ebenfalls einen als Touchscreen ausgebildeten Display 202 und einen Lautsprecher 204, sodass dem Maschinenbediener auch über das mobile Endgerät 200 visuell und akustisch Informationen zur Verfügung gestellt werden können. Das Display 202, der Lautsprecher 204 und ein Funkübertragungsmodul 208 sind signalübertragend mit einer Datenverarbeitungseinheit 206 des mobilen Endgeräts 200 verbunden.

Die landwirtschaftliche Bodenbearbeitungsmaschine 10 und das mobile Endgerät 200 sind dazu eingerichtet, Daten D1 untereinander auszutauschen. Das mobile Endgerät 200 und das Fahrzeug 100 sind dazu eingerichtet, Daten D2 untereinander auszutauschen. Das Fahrzeug 100 und die landwirtschaftliche Bodenbearbeitungsmaschine 10 sind dazu eingerichtet, Daten D3 untereinander auszutauschen.

Mittels des dargestellten Systems aus der landwirtschaftlichen Bodenbearbeitungsmaschine 10, dem Fahrzeug 100 und dem mobilen Endgerät 200 ist ein Verfahren zum Unterstützen eines Maschinenbedieners beim Einstellen der landwirtschaftlichen Bodenbearbeitungsmaschine 10 ausführbar.

Dabei wird zunächst der für den momentanen oder einen geplanten Bodenbearbeitungsvorgang geeignete Zugpunkt sowie eine geeignete Vorderfurchenbreite, Arbeitsbreite und/oder Arbeitstiefe für die landwirtschaftliche Bodenbearbeitungsmaschine 10 ermittelt. Das Ermitteln dieser Einstellparameter für die landwirtschaftliche Bodenbearbeitungsmaschine 10 kann durch die landwirtschaftliche Bodenbearbeitungsmaschine 10, dem Fahrzeug 100 dem mobilen Endgerät 200 und/oder einer anderen externen Einrichtung erfolgen, wobei zum Ermitteln der Einstellparameter die Sensoren 18a, 18b, 108a, 108b, 116 und/oder ein oder mehrere Kameras zum Einsatz kommen können.

Nachdem ein geeigneter Zugpunkt sowie eine geeignete Vorderfurchenbreite, Arbeitsbreite und Arbeitstiefe für die landwirtschaftliche Bodenbearbeitungsmaschine 10 ermittelt wurde, wird ein Einstellvorschlag für die landwirtschaftliche Bodenbearbeitungsmaschine 10 ausgegeben, welcher bei Befolgung zur Einstellung der bezeichneten Einstellparameter an der landwirtschaftlichen Bodenbearbeitungsmaschine 10 führt.

Der Einstellvorschlag für die landwirtschaftliche Bodenbearbeitungsmaschine 10 kann mittels einer Anzeigeeinrichtung und/oder mittels einer Tonwiedergabeeinrichtung erfolgen. Abhängig von der Betriebssituation erfolgt die Ausgabe des Einstellvorschlags über das Display 112 und/oder den Lautsprecher 118 des Fahrzeugs 100 und/oder über das Display 202 und/oder den Lautsprecher 204 des mobilen Endgeräts 200.

Beim Ausgeben des Einstellvorschlags für die landwirtschaftliche Bodenbearbeitungsmaschine 10 wird der herbeizuführende Zustand der Einstelleinrichtungen 20a-20c der landwirtschaftlichen Bodenbearbeitungsmaschine 10 akustisch und/oder visuell wiedergegeben.

Die Einstelleinrichtungen 20a-20c weisen jeweils ein längenveränderliches Einstellglied auf, sodass der herbeizuführende Zustand eine einzustellende Länge der längenveränderlichen Einstellglieder umfasst. Damit eine präzise Einstellung der Einstellparameter vor dem Ausführen des Bodenbearbeitungsvorgangs erfolgen kann, umfasst das Wiedergeben des herbeizuführenden Zustands der Einstelleinrichtungen 20a-20c der landwirtschaftlichen Bodenbearbeitungsmaschine 10 das Wiedergeben entsprechender Zielwerte, welche jeweils an einer Einstellskala der jeweiligen Einstelleinrichtung 20a-20c der landwirtschaftlichen Bodenbearbeitungsmaschine 10 einzustellen sind. Es kann zusätzlich die Möglichkeit bestehen, dass der Maschinenbediener sich ein Abbild der einzustellenden Einstelleinrichtung 20a-20c der landwirtschaftlichen Bodenbearbeitungsmaschine 10 anzeigen lassen oder eine Animation, welche die vorzunehmende Einstellung an der Einstelleinrichtung 20a-20c der landwirtschaftlichen Bodenbearbeitungsmaschine 10 zeigt, abspielen kann.

Zur Steigerung des Bedienkomforts können auch die Ist-Werte der Einstellparameter der landwirtschaftlichen Bodenbearbeitungsmaschine 10 ermittelt werden und mit den geeigneten Einstellparametern für die landwirtschaftliche Bodenbearbeitungsmaschine 10 vergleichen werden. Durch den Vergleich kann festgestellt werden, welche Dringlichkeit die Einstellung der Einstellparameter hat und/oder ob die momentan eingestellten Einstellparameter für den momentanen oder geplanten Bodenbearbeitungsvorgang geeignet sind.

Während des Verfahrens wird außerdem der Effekt ermittelt, welcher sich durch die Einstellung der jeweiligen Einstellparameter an der landwirtschaftlichen Bodenbearbeitungsmaschine 10 ergibt, sodass der Effekt, beispielsweise die Kraftstoffeinsparung, visuell und/oder akustisch ausgegeben werden kann.

Zur weiteren Steigerung des Einstellkomforts können die geeigneten Einstellparameter nach deren Ausgabe auch selbsttätig durch die landwirtschaftliche Bodenbearbeitungsmaschine eingestellt werden, wobei das Einstellen der Einstellparameter durch die landwirtschaftliche Bodenbearbeitungsmaschine 10 von einer Freigabe des Maschinenbedieners abhängig ist.

### Bezugszeichenliste

- 10: Bodenbearbeitungsmaschine
- 12a-12f: Bodenbearbeitungswerkzeuge
- 14: Kupplungseinrichtung
- 16: Stützrad
- 18a, 18b: Sensoren
- 20a-20c: Einstelleinrichtungen
- 22: Steuerungseinrichtung
- 24: Rahmen

- 100: Fahrzeug
- 102a, 102b: Vorderräder
- 104a, 104b: Hinterräder
- 106: Kupplungseinheit
- 108a, 108b: Sensoren
- 110: Führerhaus
- 112: Display
- 114: Steuergerät
- 116: Sensor
- 118: Lautsprecher

- 200: mobiles Endgerät
- 202: Display
- 204: Lautsprecher
- 206: Datenverarbeitungseinheit
- 208: Funksendemodul

- D1-D3: Daten

## Patentansprüche

1. Verfahren zum Unterstützen eines Maschinenbedieners beim Einstellen einer als Pflug ausgebildeten landwirtschaftlichen Bodenbearbeitungsmaschine (10) mit dem Schritt:
- Ermitteln eines oder mehrerer für einen momentanen oder geplanten Bodenbearbeitungsvorgang geeigneter Einstellparameter für die landwirtschaftliche Bodenbearbeitungsmaschine (10);
- Ausgeben eines Einstellvorschlags für die landwirtschaftliche Bodenbearbeitungsmaschine (10), welcher bei Befolgung zur Einstellung des einen oder der mehreren geeigneten Einstellparameter an der landwirtschaftlichen Bodenbearbeitungsmaschine (10) führt,
wobei der eine oder die mehreren geeigneten Einstellparameter für die landwirtschaftliche Bodenbearbeitungsmaschine (10) den Zugpunkt, die Vorderfurchenbreite, die Arbeitsbreite und/oder die Arbeitstiefe der landwirtschaftlichen Bodenbearbeitungsmaschine (10) umfassen,
**gekennzeichnet dadurch, dass**
bei der Ermittlung des einen oder der mehreren für den momentanen oder geplanten Bodenbearbeitungsvorgang geeigneten Einstellparameter für die landwirtschaftliche Bodenbearbeitungsmaschine Daten berücksichtigt werden, welche von einem oder mehreren Sensoren der landwirtschaftlichen Bodenbearbeitungsmaschine zur Verfügung gestellt werden.

2. Verfahren nach Anspruch 1,
**dadurch gekennzeichnet, dass** das Ausgeben des Einstellvorschlags für die landwirtschaftliche Bodenbearbeitungsmaschine (10) mittels einer Anzeigeeinrichtung, insbesondere mittels eines Displays (112, 202), erfolgt.

3. Verfahren nach Anspruch 2,
**dadurch gekennzeichnet, dass** die Anzeigeeinrichtung ein Bestandteil der landwirtschaftlichen Bodenbearbeitungsmaschine (10), eines die landwirtschaftliche Bodenbearbeitungsmaschine (10) tragenden oder ziehenden Fahrzeugs (100) oder eines mobilen Endgeräts (200) ist.

4. Verfahren nach einem der vorstehenden Ansprüche,
**dadurch gekennzeichnet, dass** das Ausgeben des Einstellvorschlags für die landwirtschaftliche Bodenbearbeitungsmaschine (10) den folgenden Schritt umfasst:
- Anzeigen eines herbeizuführenden Zustands einer oder mehrerer Einstelleinrichtungen (20a-20c) der landwirtschaftlichen Bodenbearbeitungsmaschine (10).

5. Verfahren nach Anspruch 4,
**dadurch gekennzeichnet, dass** das Anzeigen des herbeizuführenden Zustands der einen oder der mehreren Einstelleinrichtungen (20a-20c) der landwirtschaftlichen Bodenbearbeitungsmaschine (10) zumindest einen der folgenden Schritte umfasst:
- Anzeigen eines oder mehrerer Zielwerte, welche jeweils an einer Einstellskala einer Einstelleinrichtung (20a-20c) der landwirtschaftlichen Bodenbearbeitungsmaschine (10) einzustellen sind;
- Anzeigen eines Abbilds der einzustellenden Einstelleinrichtung (20a-20c) der landwirtschaftlichen Bodenbearbeitungsmaschine (10);
- Abspielen einer Animation, welche die vorzunehmende Einstellung an der Einstelleinrichtung (20a-20c) der landwirtschaftlichen Bodenbearbeitungsmaschine (10) zeigt.

6. Verfahren nach einem der vorstehenden Ansprüche,
**gekennzeichnet durch** zumindest einen der folgenden Schritte:
- Ermitteln des Effekts, welcher sich durch die Einstellung des einen oder der mehreren geeigneten Einstellparameter an der landwirtschaftlichen Bodenbearbeitungsmaschine (10) ergibt;
- Ausgeben, insbesondere Anzeigen, des ermittelten Effekts.

7. Verfahren nach einem der vorstehenden Ansprüche,
**gekennzeichnet durch** den folgenden Schritt:
- selbsttätiges Einstellen des einen oder der mehreren Einstellparameter durch die landwirtschaftliche Bodenbearbeitungsmaschine (10),
wobei das selbsttätige Einstellen des einen oder der mehreren Einstellparameter durch die landwirtschaftliche Bodenbearbeitungsmaschine (10) vorzugsweise von einer Freigabe des Maschinenbedieners abhängig ist.

8. Landwirtschaftliche Bodenbearbeitungsmaschine (10), welche als Pflug ausgebildet ist und welcher eine Anzeigeeinrichtung, insbesondere ein Display (112, 202), zugeordnet ist, welche zum Ausgeben eines Einstellvorschlags für die landwirtschaftliche Bodenbearbeitungsmaschine (10) eingerichtet ist,
**dadurch gekennzeichnet, dass** die landwirtschaftliche Bodenbearbeitungsmaschine (10) Sensoren zur Bereitstellung von Daten zur Ermittlung der Einstellparameter aufweist, und
dazu eingerichtet ist, das Verfahren zum Unterstützen eines Maschinenbedieners beim Einstellen der landwirtschaftlichen Bodenbearbeitungsmaschine (10) nach einem der vorstehenden Ansprüche auszuführen.

## Claims

1. Method for supporting a machine operator when adjusting an agricultural soil working machine (10) designed as a plow with the steps:
- determining one or more adjustment parameters suitable for a current or planned soil working process for the agricultural soil working machine (10);
- outputting an adjustment proposal for the agricultural soil working machine (10), which proposal, when followed, leads to the adjustment of the one or more suitable adjustment parameters in the agricultural soil working machine (10),
wherein the one or more suitable adjustment parameters for the agricultural soil working machine (10) comprise the towing point, the front furrow width, the working width and/or the working depth of the agricultural soil working machine (10),
**characterized in that** in the determination of the one or more adjustment parameters suitable for the current or planned soil working process for the agricultural soil working machine, data are taken into account which are made available by one or more sensors of the agricultural soil working machine.

2. Method according to claim 1,
**characterized in that** the adjustment proposal for the agricultural soil working machine (10) is output by means of a display device, in particular by means of a display (112, 202).

3. Method according to claim 2,
**characterized in that** the display device is a component of the agricultural soil working machine (10), of a vehicle (100) carrying or towing the agricultural soil working machine (10), or of a mobile terminal (200).

4. Method according to any of the preceding claims,
**characterized in that** outputting the adjustment proposal for the agricultural soil working machine (10) comprises the following step:
- displaying a state to be brought about of one or more adjustment devices (20a-20c) of the agricultural soil working machine (10).

5. Method according to claim 4,
**characterized in that** displaying the state of the one or more adjustment devices (20a-20c) of the agricultural soil working machine (10) to be brought about comprises at least one of the following steps:
- displaying one or more target values, each of which is to be adjusted on an adjustment scale of an adjustment device (20a-20c) of the agricultural soil working machine (10);
- displaying an image of the adjustment device to be adjusted (20a- 20c) of the agricultural soil working machine (10);
- playing an animation which shows the adjustment to be made on the adjustment device (20a-20c) of the agricultural soil working machine (10).

6. Method according to any of the preceding claims,
**characterized by** at least one of the following steps:
- determining the effect resulting from the adjustment of the one or more suitable adjustment parameters in the agricultural soil working machine (10);
- outputting, in particular displaying, the determined effect.

7. Method according to any of the preceding claims,
**characterized by** the following step:
- automatic adjustment of the one or more adjustment parameters by the agricultural soil working machine (10),
wherein the automatic adjustment of the one or more adjustment parameters by the agricultural soil working machine (10) is preferably dependent on a release by the machine operator.

8. Agricultural soil working machine (10) which is designed as a plow and which is assigned a display device, in particular a display (112, 202), which is configured to output an adjustment proposal for the agricultural soil working machine (10),
**characterized in that** the agricultural soil working machine (10) has sensors for providing data for determining the adjustment parameters, and is designed to carry out the method for supporting a machine operator when adjusting the agricultural soil working machine (10) according to any of the preceding claims.

## Revendications

1. Procédé d'assistance à un opérateur de machine lors du réglage d'une machine agricole de traitement du sol (10) conçue comme une charrue, présentant l'étape de :
- détermination d'un ou de plusieurs paramètres de réglage pour la machine agricole de traitement du sol (10) pour un processus instantané ou planifié de traitement du sol ;
- émission d'une proposition de réglage pour la machine agricole de traitement du sol (10) qui, en cas de respect, conduit au réglage dudit un ou desdits plusieurs paramètres de réglage appropriés sur la machine agricole de traitement du sol (10),
ledit un ou lesdits plusieurs paramètres de réglage appropriés pour la machine agricole de traitement du sol (10) comprenant le point de traction, la largeur du sillon avant, la largeur de travail et/ou la profondeur de travail de la machine agricole de traitement du sol (10), **caractérisé en ce que**, lors de la détermination dudit un ou desdits plusieurs paramètres de réglage appropriés pour le processus momentané ou planifié de traitement du sol pour la machine agricole de traitement du sol, des données qui sont mises à disposition par un ou plusieurs capteurs de la machine agricole de traitement du sol sont prises en considération.

2. Procédé selon la revendication 1,
**caractérisé en ce que** l'émission de la proposition de réglage pour la machine agricole de traitement du sol (10) est effectuée au moyen d'un dispositif d'affichage, en particulier au moyen d'un écran (112, 202).

3. Procédé selon la revendication 2,
**caractérisé en ce que** le dispositif d'affichage est un élément de la machine agricole de traitement du sol (10), d'un véhicule (10) portant ou tractant la machine agricole de traitement du sol (10) ou d'un terminal mobile (200).

4. Procédé selon l'une quelconque des revendications précédentes,
**caractérisé en ce que** l'émission de la proposition de réglage pour la machine agricole de traitement du sol (10) comprend l'étape suivante :
- affichage d'un état à instaurer d'un ou de plusieurs dispositifs de réglage (20a-20c) de la machine agricole de traitement du sol (10).

5. Procédé selon la revendication 4,
**caractérisé en ce que** l'affichage de l'état à instaurer dudit un ou desdits plusieurs dispositifs de réglage (20a-20c) de la machine agricole de traitement du sol (10) comprend au moins l'une des étapes suivantes :
- affichage d'une ou de plusieurs valeurs cibles qui sont à chaque fois à régler au niveau d'une échelle de réglage d'un dispositif de réglage (20a-20c) de la machine agricole de traitement du sol (10) ;
- affichage d'une représentation du dispositif de réglage (20a-20c) à régler de la machine agricole de traitement du sol (10) ;
- diffusion d'une animation qui montre le réglage à réaliser sur le dispositif de réglage (20a-20c) de la machine agricole de traitement du sol (10).

6. Procédé selon l'une quelconque des revendications précédentes,
**caractérisé par** au moins l'une des étapes suivantes :
- détermination de l'effet obtenu par le réglage dudit un ou desdits plusieurs paramètres de réglage appropriés sur la machine agricole de traitement du sol (10) ;
- émission, en particulier affichage, de l'effet déterminé.

7. Procédé selon l'une quelconque des revendications précédentes,
**caractérisé par** l'étape suivante :
- réglage automatique dudit un ou desdits plusieurs paramètres de réglage par la machine agricole de traitement du sol (10),
le réglage automatique dudit un ou desdits plusieurs paramètres de réglage par la machine agricole de traitement du sol (10) dépendant de préférence d'une autorisation de l'opérateur de machine.

8. Machine agricole de traitement du sol (10) qui est conçue comme une charrue et à laquelle est associé un dispositif d'affichage, en particulier un écran (112, 202), qui est conçu pour émettre une proposition de réglage pour la machine agricole de traitement du sol (10), **caractérisée en ce que** la machine agricole de traitement du sol (10) présente des capteurs pour la mise à disposition de données pour déterminer les paramètres de réglage et est conçue pour exécuter le procédé d'assistance à un opérateur de machine lors du réglage de la machine agricole de traitement du sol (10) selon l'une quelconque des revendications précédentes.
